Europäisches Patentamt

**European Patent Office**

Office européen des brevets

(11) Publication number: **0 017 971**
**B1**

(12) **EUROPEAN PATENT SPECIFICATION**

(45) Date of publication of patent specification: **21.10.81**

(51) Int. Cl.³: **G 03 B 1/42, G 03 B 17/26**

(21) Application number: **80102036.3**

(22) Date of filing: **16.04.80**

(54) **Pressure member urging mechanism, still camera and film cartridge.**

(30) Priority: **18.04.79 US 31266**
**27.08.79 US 69678**

(43) Date of publication of application:
**29.10.80 Bulletin 80/22**

(45) Publication of the grant of the European patent:
**21.10.81 Bulletin 81/42**

(84) Designated Contracting States:
**DE FR GB IT**

(56) References cited:
**DE - A1 - 2 460 129**
**DE - A1 - 2 809 856**
**US - A - 1 829 332**
**US - A - 2 645 170**

(73) Proprietor: **EASTMAN KODAK COMPANY**
**343 State Street**
**Rochester, New York 14650 (US)**

(72) Inventor: **Hozman, Nelson Dario**
**901 Elmgrove Road**
**Rochester New York (US)**
Inventor: **Reynolds, Robert Louis**
**901 Elmgrove Road**
**Rochester New York (US)**
Inventor: **Kirn, Thomas Gerard**
**901 Elmgrove Road**
**Rochester New York (US)**

(74) Representative: **Blickle, K. Werner, Dipl.-Ing. et al.**
**KODAK AKTIENGESELLSCHAFT Postfach 369**
**D-7000 Stuttgart 60 (DE)**

Courier Press, Leamington Spa, England.

# Pressure member urging mechanism, still camera and film cartridge

This invention relates to an adjustable mechanism for urging a pressure member against photographic film to locate an exposure area of the film in an exposure position.

In prior photographic cameras film is held flat in an exposure plane by direct engagement with a spring-urged pressure member which pressure member forms part of the camera. U.S. Patent 1,829,332 discloses a cam structure for adjusting the force urging a pressure member toward the film in a roll film camera.

DE-OS 28 09 856 discloses a cartridge with a small format, disk shaped film unit and a flat camera therefore. In one embodiment (Fig. 18) of that disclosure, a pressure member is part of the cartridge and is urged toward the film by a force applying means in the camera. To permit movement of the film between exposures the urging force of the camera mechanism is relieved during film advance by a lever mechanism coupled to the camera shutter operating mechanism.

These prior lever and cam structures are somewhat complicated and require more space than is desirable in modern cameras, especially in a compact flat camera for a disk shaped film unit.

It is the object of this invention to provide an adjustable pressure member urging mechanism which is compact and uncomplicated.

This object is accomplished by a mechanism including a flexible strip having a bowable portion and means for applying a longitudinal force to the strip. Movement of the strip is restricted at a portion of the strip which causes a variance in the amount of bow of the bowable portion in response to application of such longitudinal force. The bowable portion is positioned to apply an urging force to the pressure member as a function of the amount of the bow.

This invention has particular application in a still camera generally of the type described in DE-OS 28 09 856 which is designed to receive a film cartridge having a disk of photographic film, a pressure member, a casing enclosing the film disk and an opening in the casing through which the urging force can be applied to the pressure member.

In a preferred embodiment, the bowable portion of the strip is constructed of a material which resiliently resists bowing and the means for applying a longitudinal force includes means for applying the force toward the bowed portion thereby tending to increase the amount of bow. The resilience of the bowable portion then tends to reduce the amount of bow upon reduction of the longitudinal force.

The term "longitudinal" has been used to describe the force tending to bow the strip because it is generally descriptive of the force used in the preferred embodiment. The term is meant to include any force generally parallel to the plane of the strip, regardless of the relative length and width of the strip.

For a more complete understanding of the present invention, reference should be had to the following detailed description of the invention taken in conjunction with the accompanying drawings in which:

Fig. 1 is a front perspective view of a still picture camera in which the invention is particularly useful;

Fig. 2 is a rear perspective view of the still picture camera and of a film cartridge, which shows the camera door opened for receiving the cartridge;

Fig. 3 is an exploded perspective view of a mechanism in the camera for urging a pressure member in the cartridge against the film, according to the preferred embodiment of the present invention;

Fig. 4 is a section view of the pressure member urging mechanism during operation preparatory to film exposure; and

Fig. 5 is an elevation view of a shutter operating mechanism in the camera, which moves an actuating pin to operate the pressure member urging mechanism.

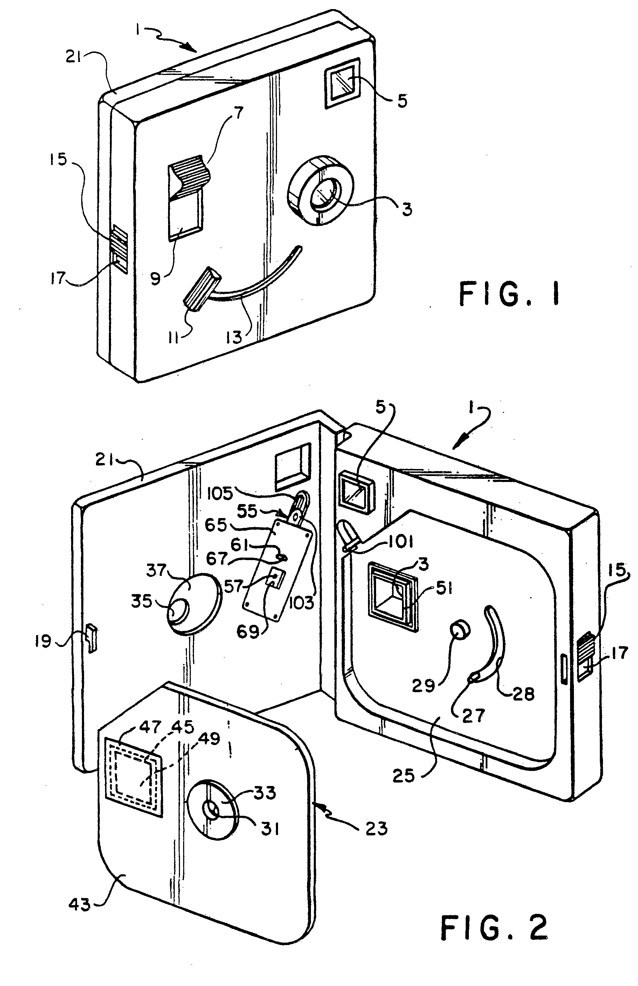

Referring now to the drawings and in particular to Fig. 1, there is shown a still-picture camera. At the front of the camera 1 there is provided a picture-taking lens 3, a viewfinder 5, a shutter release button 7, movable along a straight slot 9, and a film advance tab 11, movable along an arcuate slot 13. A locking tab 15 at one side of the camera 1 is movable along a straight slot 17 to disengage, in Fig. 2, from an internal latch 19, located on a loading door 21 at the rear of the camera. This allows the loading door 21 to be opened for loading a film cartridge 23 into a receiving chamber 25 of the camera. The chamber 25 is sized and shaped to receive the cartridge 23 only in one specific orientation, as shown in Fig. 2. When the cartridge 23 is received in the chamber 25, a pin 27, coupled to the film advance tab 11 and extending from an arcuate slot 28, engages film drive means (not shown) in the cartridge. Moreover, a stationary post 29, projecting into the receiving chamber 25, extends into a central opening 31 in a cartridge core 33 of the received cartridge. When the loading door 21 is closed, exposure numbers on the cartridge core 33 are individually viewable through a window 35 in the door 21 and the cartridge core 33 is received in a cavity 37 which overlaps the window.

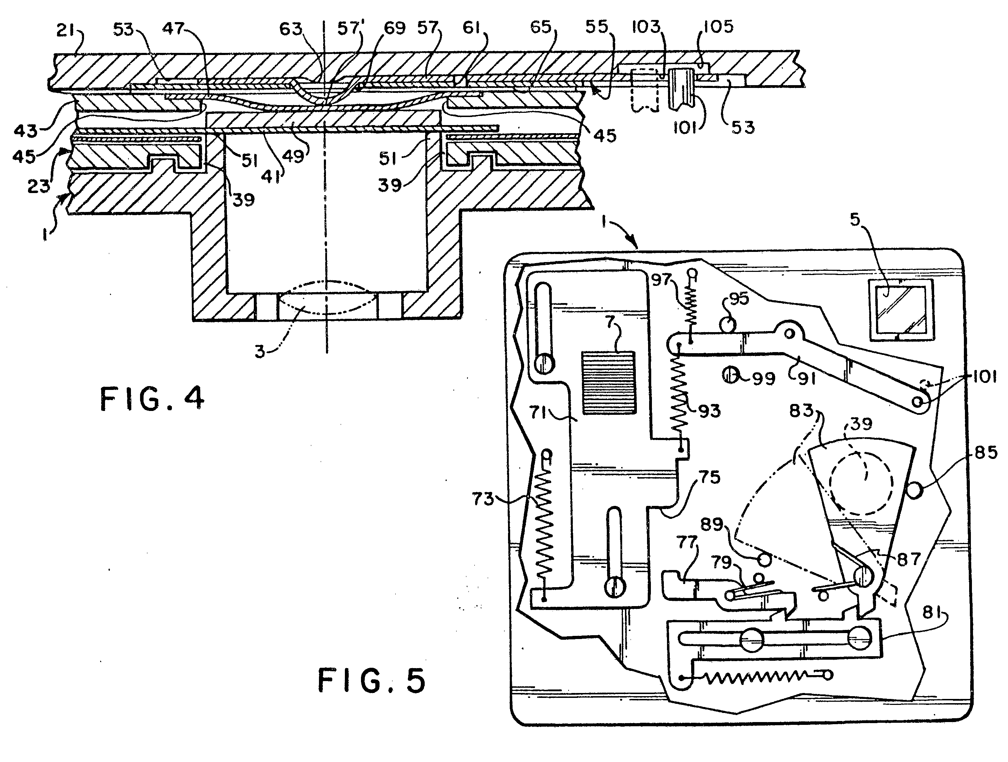

The film cartridge 23, as shown in Fig. 4, includes a rectangular exposure window 39 which is optically aligned with the picture-taking lens 3 upon receipt of the film cartridge in the receiving chamber 25. A film disk 41 in the cartridge 23 can be rotated incrementally about the stationary post 29 in the receiving chamber 25 (Fig. 2). This moves successive exposure areas of the film disk 41 into alignment with the exposure window 39, as in Fig. 4. The film disk 41 is rotated by pushing the film advance tab 11 along the arcuate slot 13, in Fig. 1. The pushed tab 11 moves the pin 27 along the arcuate slot 28, in Fig. 2, which operates film drive means (not shown) in the cartridge 23.

A rear wall 43 of the cartridge 23 has a rectangular opening 45, shown aligned with the exposure window 39 in Fig. 4. Opening 45 is not necessarily the same size as exposure window 39. For example, it can be substantially smaller. The opening 45 is covered by an opaque resiliently flexible membrane 47 which is bonded to the rear wall 43, as in Figs. 2 and 4. A rigid pressure member 49 is normally disposed within the opening 45, substantially parallel to and spaced from the film disk 41. The pressure member 49 is fixed to the flexible membrane 47. Upon deformation of the flexible membrane 47 partially into the opening 45, as in Fig. 4, the pressure member 49 is pushed by the flexible membrane 47 partially out of the opening 45 and is brought to bear against the film disk 41. The pressure member 49, in bearing against the film disk 41, presses the film disk into contact with a rectangular frame 51, projecting from the receiving chamber 25 into the exposure window 39; whereupon, an exposure area of the film disk 41 is held substantially flat in an exposure plane coincident with the focal plane of the picture-taking lens 3.

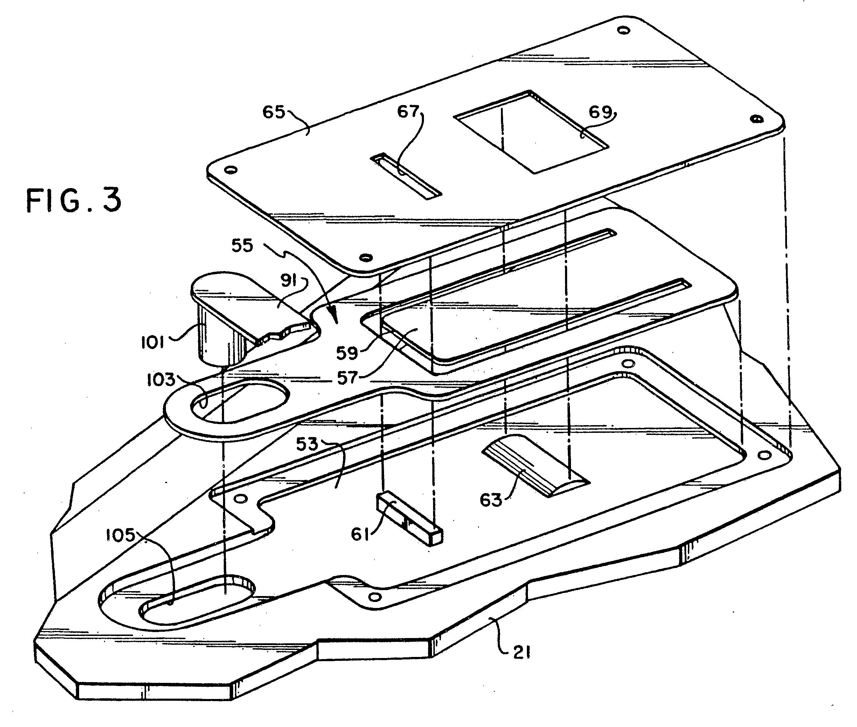

The preferred embodiment of the present invention, which is a mechanism for urging the pressure member 49 against the film disk 41 by deforming the flexible membrane 47, is most clearly shown in Fig. 3. The loading door 21 of the camera 1 includes a recess 53 which defines a storage plane for a strip 55. The strip 55 which provides a pressure plate urging member is constructed of a flexible material, and, in a preferred form, a resiliently flexible material, such as polyester. The strip 55 includes a tongue 57 which has a forward or leading end 59 which abuts against a stop 61 fixed to the loading door 21 in the recess 53. Stop 61 serves as means for restricting movement of strip 55 at a portion thereof. When a longitudinal force is applied to the strip 55 directed to the left, in Fig. 3, the leading end 59 of the tongue 57 is held stationary, which causes a bowable portion 57' (Fig. 4) of the tongue to flex and bow out of the recess 53. A slight hump 63 may be provided in the recess 53 beneath the bowable portion 57' to establish a minimum bow and facilitate bowing. When the strip 55 is moved to the right, in Fig. 3 (or Fig. 4, to the left) the bowable portion 57' substantially straightens, moving back toward the storage plane defined by the recess 53. If strip 55 is resiliently flexible, bowing of the bowable portion 57' establishes a resilient or spring-like force which can be used to return the strip 55 to the right, in Fig. 3.

A constraining plate 65, having one opening 67 into which the stop 61 protrudes and another opening 69 through which the bowed portion of the tongue 57 protrudes, is secured to the loading door 21, over the strip 55. When the strip 55 is moved to the left, in Fig. 3, in the storage plane defined by the recess 53, the constraining plate 65 maintains strip 55, which acts as pressure plate urging member, in the storage plane, except for the bowable portion 57' which moves through the opening 69 in the constraining plate, as in Fig. 4.

Referring to Fig. 4, the bowable portion 57' applies a force to the flexible membrane 47 to move the flexible membrane 47 and the pressure member 49 toward film disk 41. The pressure member 49 is urged by the force of the bowable portion 57' against the film disk 41 to press the film disk into contact with the frame 51, projecting into the exposure window 39; whereupon, the pressed disk 41 is held substantially flat in the focal plane of the picture-taking lens 3 for exposure.

Referring now to Fig. 5, there is shown a shutter operating mechanism in the camera 1. When the shutter release button 7 is pushed downward, a slide 71 fixed to the button, is similarly moved against the urging of a return spring 73. An extended edge 75 of the moved slide 71 pivots a restraining latch 77 in a counterclockwise direction against the urging of a return spring 79. The restraining latch 77 releases a spring-urged striker 81 which moves to the right to strike a rebound-type shutter blade 83, normally held against a stop 85 by a return spring 87. The shutter blade 83 pivots in a counterclockwise direction, first uncovering the exposure window 39 of the cartridge 23 to initiate an exposure interval and then rebounding off a stop 89 to terminate the exposure interval by again covering the exposure window. Subsequent operation of the film advance tab 11, in Fig. 1, serves to recock the striker 81 for the next actuation of the shutter blade 83. Conventional double exposure prevention means, although not shown, are provided to insure that the shutter release button 7 cannot be pushed downward in Fig. 5, following exposure termination, until film advance is completed.

The slide 71, in Fig. 5, is connected to a pivotally mounted arm 91 by a coupling spring 93. The arm 91 is normally held against a stop 95 by a return spring 97 which is weaker than the coupling spring 93 in its extended position. When the slide 71 is initially moved downward, in Fig. 5, for effecting shutter actuation, the arm 91 is pivoted in a counterclockwise direction by spring 93 until halted by a stop 99. An actuating pin 101, located on arm 91, projects, as shown in Figs. 3 and 4, loosely through an elongate opening 103 in the strip 55 and into a channel 105 in the recess 53 in the loading door 21. As a result of movement of the slide 71, the actuating pin 101 on the arm 91 provides means for applying a longitudinal force to the strip 55 and thus to the bowable portion 57'. The force is directed generally to the left, in Fig. 3 (or in Fig. 4, generally to the right) to bow the bowable portion through the opening 69 in the constraining plate 65. The bowable portion 57' of the tongue 57, in Fig. 4, urges the pressure member 49 against the film disk 41 to hold the film disk substantially flat in the focal plane of the picture-taking lens 3 before the exposure interval begins. After termination of the exposure interval and return of the slide 71, as in Fig. 5, the arm 91 is pivoted in a clockwise direction by the return spring 97 from the stop 99 to the stop 95. The actuating pin 101 on the arm 91 moves generally to the left, in Fig. 4, along the elongate opening 103 in strip 55, which acts as pressure plate urging member. This releases the strip 55 for movement generally to the left, in Fig. 4, by the resilient force established in the bowable portion 57'; whereupon, the bowable portion substantially flattens in the recess 53, reducing the urging force on the flexible membrane 47. The flexible membrane 47 returns from its deformed configuration toward straight configuration, reducing the urging force on the pressure member 49 to allow the film disk 41 to be advanced across the exposure window 39 for the next exposure.

Although the actuating pin 101 is shown in Figs. 3 and 4 as fitting loosely through the elongate opening 103 in the strip 55, which acts as pressure plate urging member, it will be appreciated that a tight fit can be devised; in which instance, the spring 97 and the resilient force established in the bowable portion of the tongue 57 cooperate to move the strip 55 to substantially flatten the bowable portion.

When the loading door 21 is opened to remove the film cartridge 23 from the receiving chamber 25, the channel 105 in the loading door and the opening 103 in the strip 55 are separated from the actuating pin 101. Closing the loading door 21 again couples the actuating pin 101 and the strip 55.

The present invention has been described in detail with particular reference to the preferred embodiment thereof, but it will be understood that variations and modifications can be effected within the spirit and scope of the invention. For example, the strip 55 can be located in the film cartridge 23 instead of in the loading door 21 of the camera 1. The flexible membrane can be eliminated with light tightness provided by some other means and the strip directly engaging the pressure member. Alternatively, the pressure member 49 can be located in the camera instead of in the opening 45 of the film cartridge. According to another example, the bowable portion 57' of the strip 55 could normally be in the bowed configuration instead of in the substantially flat configuration; in which instance, the bowable portion would be substantially flattened only in anticipation of film advance, and immediately after film advance (but before film exposure) would return to its normal bowed configuration. In such a structure the pin 101 would be made responsive to film advance. Also in such a structure the bowable portion 57' could be naturally shaped in that condition, creating a resilient force toward a bowed condition when flattened.

## Claims

1. An adjustable mechanism for urging a pressure member (49) against photographic film, characterized by a flexible strip (55) having a bowable portion (57') positioned to apply an urging force to the pressure member as a function of the amount of bow, means (101) for applying a longitudinal force to the bowable portion and means (61) restricting movement of the strip at a portion of the strip which causes variance in the amount of bow of the bowable portion in response to application of such longitudinal force.

2. A still camera for receiving a film cartridge of the type having a disk of photographic film, a pressure member, a casing enclosing the film disk, said casing having an opening through which a force can be applied to the pressure member, characterized in that said camera includes an adjustable mechanism for urging the pressure member (49) against the film disk (41), said adjustable mechanism comprising a flexible strip (55) having a bowable portion (57') positioned to apply an urging force to the pressure member as a function of the amount of bow, means (101) for applying a longitudinal force to the bowable portion and means (61) restricting movement of the strip at a portion of the strip which causes variance in the amount of bow of the bowable portion in response to application of such longitudinal force.

3. A still camera according to claim 2, further characterized in that the bowable portion (57') of the strip (55) is constructed of a material which resiliently resists bowing, and that the longitudinal force is applied to the bowable portion in a direction toward the bowed portion to increase the amount of the bow as the longitudinal force is increased, the resilience of the bowable portion tending to reduce the amount of the bow in response to a reduction in such longitudinal force.

4. A still camera according to claim 2 or 3, characterized by an abutment (63) engaging the bowable portion (57') to establish a minimum amount of bow.

5. A still camera according to any of claims 2 to 4, characterized in that the strip (55) is positioned so that the bowable portion (57') will increase its urging force on the pressure member (49) of a received film cartridge (23) in response to an increase in the amount of the bow and decrease its urging force on the pressure member in response to a decrease in the amount of the bow.

6. A still camera according to any of claims 2 to 5, characterized in that the bowable portion (57') is positioned to enter the opening (45) of a received cartridge (23) and contact the pressure member (49).

7. A still camera according to any of claims 2 to 6, characterized in that the strip (55) includes a slot (103) for receiving application of the longitudinal force.

8. A still camera according to any of claims 2 to 7, characterized by means (65) for preventing bowing of the strip except in the bowable portion.

9. Film cartridge of the type having a disk (41) of photographic film, a pressure member (49), a casing enclosing the film disk, said casing having an opening (45) through which a force can be applied to the pressure member, characterized in that said cartridge (23) includes an adjustable mechanism according to claim 1 for urging the pressure member against the film disk.

## Revendications

1. Mécanisme réglable pour appliquer un organe presseur (49) contre un film photographique, mécanisme caractérisé en ce qu'il comprend une lame flexible (55) ayant une partie cintrable (57') disposée pour exercer une force de poussée sur l'organe presseur fonction de l'importance de la flexion, des moyens (101) pour communiquer une force longitudinale à la partie cintrable et un moyen (61) limitant le déplacement de la lame à une partie de celle-ci qui provoque une variation de l'importance de la flexion de la partie cintrable résultant de l'application de cette force longitudinale.

2. Appareil photographique destiné à recevoir un chargeur de film d'un type comprenant un disque de film photographique, un organe presseur, un contenant renfermant le disque de film et présentant une ouverture par laquelle on peut exercer une force sur l'organe presseur, appareil caractérisé en ce qu'il est muni d'un mécanisme réglable pour appliquer l'organe presseur (49) contre le disque de film (41), ce mécanisme réglable comprenant une lame flexible (55) ayant une partie cintrable (57') disposée pour exercer, une force de poussée sur l'organe presseur fonction de l'importance de la flexion, des moyens (101) pour communiquer une force longitudinale à la partie cintrable et un moyen (61) limitant le déplacement de la lame à une partie de celle-ci qui provoque une variation de l'importance de la flexion de la partie cintrable résultant de l'application de cette force longitudinale.

3. Appareil conforme à la revendication 2 caractérisé en ce que la partie cintrable (57') de la lame (55) est construite en un matériau qui résiste élastiquement à la flexion et en ce que la force longitudinale est appliquée à la partie

cintrable en direction de la partie cintrée pour augmenter l'importance de la flexion lorsque la force longitudinale croît, l'élasticité de la partie flexible tendant à réduire l'importance de la flexion à la suite d'une diminution de l'intensité de la force longitudinale.

4. Appareil conforme à la revendication 2 ou 3 caractérisé par une protubérance (63) au contact de la partie cintrable (57') pour conférer une flexion minimale.

5. Appareil conforme à l'une quelconque des revendications 2 à 4 caractérisé en ce que la lame (55) est placée de manière que la partie cintrable (57') accroisse la force d'application qu'elle exerce sur l'organe presseur (49) d'un chargeur de film (23) qui y placé en réponse à une augmentation de l'importance de la flexion et réduise cette force sur l'organe presseur en fonction d'une diminution de la flexion.

6. Appareil conforme à l'une quelconque des revendications 2 à 5 caractérisé en ce que la partie cintrable (57') est placée de manière à pénétrer dans l'ouverture (45) d'un chargeur (23) qui y est placé et à venir au contact de l'organe presseur (49).

7. Appareil conforme à l'une quelconque des revendications 2 à 6 caractérisé en ce que la lame (55) présente une fente (103) pour y appliquer la force longitudinale.

8. Appareil conforme à l'une quelconque des revendications 2 à 7 caractérisé par des moyens (65) pour interdire la flexion de la lame hormis la partie cintrable.

9. Chargeur de film d'un type comprenant un disque (41) de film photographique, un organe presseur (49), un contenant renfermant le disque de film et présentant une ouverture (45) par laquelle on peut exercer une force sur l'organe presseur, chargeur caractérisé en ce qu'il (23) comprend un mécanisme réglable conforme à la revendication 1 pour appliquer l'organe presseur contre le disque de film.

## Patentansprüche

1. Verstellbare Vorrichtung, die ein Andruckteil (49) gegen einen photographischen Film drückt, gekennzeichnet durch einen flexiblen Streifen (55) mit einem biegbaren Abschnitt (57'), der so angeordnet ist, daß er in Abhängigkeit vom Grad der Wölbung auf das Andruckteil eine Kraft ausübt, durch Mittel (101), die eine in Längsrichtung des Streifens (55) gerichtete Kraft auf den biegbaren Abschnitt ausüben, und durch Mittel (61), die eine Bewegung des Streifens in einem Abschnitt dieses Streifens verhindern, wodurch der Wölbungsgrad des biegbaren Abschnitts in Abhängigkeit von der Einwirkung jener Längskraft verändert wird.

2. Stehbildkamera zur Aufnahme einer Filmkassette mit einer Scheibe photographischen Films, einem Andruckteil und einer Umhüllung, welche die Filmscheibe umschließt, wobei die Umhüllung eine Öffnung aufweist, durch die hindurch eine Kraft auf das Andruckteil ausgeübt werden kann, dadurch gekennzeichnet, daß die Kamera eine verstellbare Vorrichtung besitzt, die das Andruckteil (49) gegen die Filmscheibe (41) drückt, wobei die verstellbare Vorrichtung einen flexiblen Streifen (55) mit einem biegbaren Abschnitt (57') aufweist, der so angeordnet ist, daß er in Abhängigkeit vom Grad der Wölbung auf das Andruckteil eine Kraft ausübt, durch Mittel (101), die eine in Längsrichtung des Streifens (55) gerichtete Kraft auf den biegbaren Abschnitt ausüben, und durch Mittel (61), die eine Bewegung des Streifens in einem Abschnitt dieses Streifens verhindern, wodurch der Wölbungsgrad des biegbaren Abschnitts in Abhängigkeit von der Einwirkung jener Längskraft verändert wird.

3. Stehbildkamera nach Anspruch 2, dadurch gekennzeichnet, daß der biegbare Abschnitt (57') des Streifens (55) aus einem biegeelastischen Material besteht, und daß die Längskraft auf den biegbaren Abschnitt in Richtung auf den gebogenen Abschnitt ausgeübt wird, damit bei einer Vergrößerung der Längskraft der Wölbungsgrad zunimmt, wobei durch die Nachgiebigkeit des biegbaren Abschnitts in Abhängigkeit von einer Verminderung der Längskraft der Wölbungsgrad verringert wird.

4. Stehbildkamera nach den Ansprüchen 2 oder 3, gekennzeichnet durch eine an dem biegbaren Abschnitt (57') zur Erzeugung einer Mindestwölbung angreifende Erhöhung (63).

5. Stehbildkamera nach einem der Ansprüche 2 bis 4, dadurch gekennzeichnet, daß der Streifen (55) so angeordnet ist, daß der biegbare Abschnitt (57') in Abhängigkeit von einer Zunahme des Wölbungsgrades seine auf das Andruckteil (49) einer eingelegten Filmkassette (23) wirkende Kraft vergrößert und in Abhängigkeit von einer Abnahme des Wölbungsgrades seine auf das Andruckteil wirkende Kraft verringert.

6. Stehbildkamera nach einem der Ansprüche 2 bis 5, dadurch gekennzeichnet, daß der biegbare Abschnitt (57') so angeordnet ist, daß er in die Öffnung (45) einer eingelegten Kassette (23) eintritt und mit dem Andruckteil (49) in Kontakt kommt.

7. Stehbildkamera nach einem der Ansprüche 2 bis 6, dadurch gekennzeichnet, daß der Streifen (55) einen Schlitz (103) aufweist, an dem die Längskraft angreift.

8. Stehbildkamera nach einem der Ansprüche 2 bis 7, gekennzeichnet durch Mittel (65), die verhindern, daß der Streifen außerhalb des biegbaren Abschnitts gebogen wird.

9. Filmkassette mit einer Scheibe (41) photographischen Films, einem Andruckteil (49), einer Umhüllung, die die Filmscheibe umschließt, wobei die Umhüllung eine Öffnung (45) aufweist, durch die hindurch eine Kraft auf das Andruckteil ausgeübt werden kann, dadurch gekennzeichnet, daß die Kassette (23) eine verstellbare Vorrichtung nach Anspruch 1 einschließt, die das Andruckteil gegen die Filmscheibe drückt.

FIG. 1

FIG. 2

FIG. 3

FIG. 4

FIG. 5